# EUROPÄISCHE PATENTANMELDUNG

(11) **EP 0 691 513 A2**
(43) Veröffentlichungstag der Anmeldung: **10.01.1996**
(21) Anmeldenummer: 95109590.0
(22) Anmeldetag: 21.06.1995
(51) Int. Cl.: F24C 15/20, A21B 3/04

(54) **Ofen zur Wärmebehandlung von Lebensmitteln**

(30) Priorität: 05.07.1994 DE 4423557
(71) Anmelder: Wiesheu-Wiwa GmbH, D-71563 Affalterbach (DE)
(72) Erfinder: Braun, Martin, D-73760 Ostfildern (DE); Mohr, Johann, D-74078 Heilbronn (DE); Lesch, Hans, D-74232 Abstatt (DE)
(74) Vertreter: Gahlert, Stefan, Dr.-Ing.

(57) **Zusammenfassung**

Es wird ein Ofen zur Wärmebehandlung von Lebensmitteln angegeben, mit einem von einem Gehäuse (16) eingeschlossenen Garraum (12), der mittels einer Tür (14) verschließbar ist und vorzugsweise mittels eines Dampferzeugers (20) beheizbar ist. Oberhalb des Gehäuses (16) des Ofens (10) ist eine Absaughaube (46) angeordnet, die im vorderen Bereich oberhalb der Türöffnung (15) eine Ansaugöffnung (48) aufweist und eine Kondensationseinrichtung in Form von Prallblechen (56) umfaßt. Über einen Ventilator (62) werden Wrasendämpfe über die Ansaugöffnung (48) von vorn angesaugt und gleichfalls über eine Saugleitung (44) überschüssige Dämpfe abgesaugt, die über einen Bodenablauf (22) aus dem Garraum (12) austreten.

## Beschreibung

Die Erfindung betrifft einen Ofen zur Wärmebehandlung von Lebensmitteln, mit einem von einem Gehäuse eingeschlossenen Garraum, der mittels einer Tür verschließbar ist, mit einer Heizeinrichtung zur Beheizung des Garraums, mit einem Bodenablauf zur Abführung von Kondensat aus dem Garraum, und mit einer oberhalb des Garraums angeordneten Absaughaube zur Absaugung von Wrasendämpfen mittels eines Ventilators.

Ein derartiger Ofen ist durch die DE 88 05 455 U1 bekannt geworden.

Bei dem bekannten Ofen ist eine Abzugshaube oberhalb des Garraums angeordnet, die mit einem Ventilator und einem Kondensator gekoppelt ist, wovon der letztere an der Rückseite des Ofens vertikal angeordnet ist. Beim Öffnen der Tür austretende Wrasendämpfe werden über die Abzugshaube abgesaugt und innerhalb des Kondensators unter Zufuhr von eingesprühtem Wasser kondensiert, so daß die aus dem Kondensator austretende Abluft praktisch dampffrei ist.

Als nachteilig bei der bekannten Vorrichtung hat sich insbesondere der große Platzbedarf erwiesen. Ferner ist eine Nachrüstung bei bereits vorhandenen Öfen kaum möglich. Darüber hinaus kann die bekannte Vorrichtung nur beim Öffnen der Tür austretende Wrasendämpfe wirkungsvoll ansaugen und kondensieren. Während des Betriebes derartiger Öfen können jedoch auch bei geschlossener Tür größere Dampfmengen austreten, beispielsweise wenn zunächst tiefgefrorenes Gut verwendet wird. Die bekannte Vorrichtung ist nicht zur Abführung derartiger Dampfmengen ausgelegt.

Durch die DE 88 08 218 U1 ist ferner ein Dampfkondensierer bekannt geworden, der zur Kondensation der aus einem Ofen während des Betriebs freiwerdenden Wrasendämpfe vorgesehen ist. Auch dieser Dampfkondensierer weist ein vertikal angeordnetes Gehäuse auf, innerhalb dessen horizontal übereinanderliegende Dampfkanalabschnitte gebildet sind, die von seitlich eintretender Kühlluft gekühlt werden.

Ein derartiger Dampfkondensierer ist zwar zur Kondensation der während des Betriebes eines Ofens auftretenden Wrasendämpfe geeignet, jedoch muß zusätzlich zu einem derartigen Kondensierer eine Absaughaube vorgesehen werden, sofern man die beim Öffnen der Tür auftretenden Dämpfe absaugen möchte.

Durch die DE 32 46 333 A1 ist ferner ein Haushaltsback- und Bratofen bekannt geworden, dessen mittels einer Tür verschließbarer Garraum eine Wrasenabführungsöffnung aufweist, die in der Tür vorgesehen ist. Um einen Kondensationsniederschlag des aus dem Garraum austretenden Wrasens an den Frontteilen des Ofens zu vermeiden, ist in der Tür ein über eine Öffnung mit dem Garraum in Verbindung stehender Wrasenschacht untergebracht, der von der Wrasen-Eintrittsöffnung aus senkrecht bis zur oberen Außenkante der Tür hochgezogen ist.

Der bekannte Ofen kann zwar wirkungsvoll die während des Betriebes auftretenden Wrasendämpfe abführen, jedoch können beim Öffnen der Tür Wrasendämpfe unkontrolliert an die Umgebung austreten. Ein weiterer Nachteil der bekannten Vorrichtung besteht darin, daß diese vollständig in den Ofen integriert sein muß, und daß ein nachträglicher Anbau nicht möglich ist.

Die Aufgabe der Erfindung besteht demnach darin, einen Ofen zur Wärmebehandlung von Lebensmitteln anzugeben, der eine wirkungsvolle Absaughaube zur Absaugung von beim Öffnen der Tür austretenden Wrasendämpfen aufweist und der gleichzeitig eine wirkungsvolle Absaugung von während des Betriebes des Ofens auftretenden Wrasendämpfen ermöglicht. Dabei soll ferner die Absaughaube möglichst einfach nachträglich an einen Ofen der eingangs erwähnten Art angekoppelt werden können.

Diese Aufgabe wird erfindungsgemäß bei einem Ofen der eingangs genannten Art dadurch gelöst, daß die Absaughaube über eine Saugleitung mit dem Bodenablauf verbunden ist.

Bei dem erfindungsgemäßen Ofen wird also eine Absaughaube erfindungsgemäß in zweifacher Hinsicht genutzt. Zum einen werden nämlich beim Öffnen der Tür oder in sonstiger Weise austretende Wrasendämpfe durch die Absaughaube über den Ventilator abgesaugt und nach außen abgeführt. Zum anderen wird durch die Verbindung der Absaughaube über eine Saugleitung mit dem Bodenablauf erreicht, daß bei einem Dampfüberschuß innerhalb des Ofens die dann über den Bodenablauf austretenden Wrasendämpfe über die Saugleitung durch den Ventilator der Absaughaube abgesaugt und der Abluftleitung zugeführt werden. Auf diese Weise wird die erfindungsgemäße Absaughaube vorteilhaft in zweifacher Hinsicht genutzt, um einerseits inbesondere bei geöffneter Tür austretende Dämpfe abzuführen und um andererseits während des Betriebes austretenden überschüssigen Dampf unmittelbar über den Bodenauslauf abzusaugen.

Besondere Vorteile ergeben sich hierbei insbesondere dann, wenn der erfindungsgemäße Ofen als sog. Kombidämpfer ausgeführt ist, der mittels Dampf beheizt wird, der unmittelbar in den Garraum eintritt, um so eine Direktbeheizung der Lebensmittel durch Dampf zu erreichen, der an der Oberfläche kondensiert. Bei einer derartigen Beheizung läßt sich bei manchen Betriebszuständen ein Dampfüberschuß kaum vermeiden, insbesondere wenn gefrorene Lebensmittel behandelt werden. Darüber hinaus ist ein gewisser Dampfüberschuß sogar erwünscht, da bei der gleichzeitigen Behandlung verschiedenartiger Lebensmittel eine Geruchs- bzw. Geschmacksübertragung von einem Lebensmittel zum anderen wirkungsvoll dadurch vermieden werden kann, daß der Ofen mit einem gewissen Dampfüberschuß betrieben wird. Bei bekannten Öfen wird daher der über den Bodenauslauf austretende überschüssige Dampf durch Wasser abgelöscht, das dann in den Kondensatabfluß übertritt (vergleiche zum Beispiel GB 2 010 078 A und EP 0 171 522 B1). Der dazu erforderliche Frischwasserbedarf wird bei dem erfindungsgemäßen Ofen vollständig vermieden, da eine Absaugung unmittelbar durch die Absaughaube erfolgt und infolge des ausreichend langen Weges der Saugleitung vom Bodenablauf bis zur Absaughaube und der Vermischung mit angesaugter Frischluft überschüssiger Dampf darin weitgehend kondensiert und schließlich an den kalten Wänden der Absaughaube etwa noch bestehende Dampfreste weitgehend niedergeschlagen werden.

Die erfindungsgemäße Absaughaube ist ferner als vollständig separates Bauteil ausgeführt, in das vorzugsweise der Abluftventilator bereits integriert ist. Die Absaughaube läßt sich daher ohne weiteres nachträglich auf einen Ofen aufsetzen und über die Saugleitung beispielsweise an der Rückseite an den Bodenablauf anschließen, wozu lediglich der Einsatz eines T-Stückes notwendig ist.

In vorteilhafter Weiterbildung der Erfindung weist die Absaughaube eine Ansaugöffnung auf, die im Bereich oberhalb der Türöffnung mündet.

Auf diese Weise werden beim Öffnen der Tür austretende Dämpfe unmittelbar abgesaugt, so daß eine wirkungsvolle Abführung sichergestellt ist.

In weiter vorteilhafter Ausgestaltung der Erfindung ist eine Kondensationseinrichtung in die Absaughaube integriert.

Diese Maßnahme hat den Vorteil, daß nicht nur während des Betriebes des Ofens auftretende überschüssige Dämpfe oder beim Öffnen der Tür austretende Dämpfe abgesaugt und abgeführt werden, sondern daß gleichzeitig eine Kondensation der abgesaugten Dämpfe erreicht wird, wobei durch die Integration der Kondensationseinrichtung in die Absaughaube eine besonders platzsparende und kompakte Bauweise ermöglicht wird, wobei dennoch eine Möglichkeit der Nachrüstung erhalten bleibt.

In vorteilhafter Weiterbildung der Erfindung ist die in die Absaughaube integrierte Kondensationseinrichtung durch eine Mehrzahl von Prallflächen gebildet, zwischen denen ein Dampfkanal gebildet ist.

Es hat sich gezeigt, daß die Verwendung von Prallblechen vollständig ausreichend ist, um eine wirkungsvolle Kondensation auch größerer Dampfmengen zu erreichen, sofern die Prallbleche nur eine ausreichende Fläche aufweisen.

In weiter vorteilhafter Ausgestaltung der Erfindung sind die Prallflächen im wesentlichen vertikal angeordnet, und die Bodenfläche der Absaughaube ist in Richtung zum Saugleitungsanschluß hin geneigt.

Diese Maßnahme hat den Vorteil, daß an den Prallflächen anfallendes Kondensat sogleich nach unten abläuft und über die Bodenfläche der Absaughaube über die Saugleitung in den Bodenablauf abfließt und von hier über den Kondensatabfluß abgeführt werden kann.

Gemäß einer weiteren Ausgestaltung der Erfindung ist der Ventilator im hinteren, der Tür gegenüber liegenden Bereich der Absaughaube angeordnet.

Diese Maßnahme hat den Vorteil, daß der Ventilator erst am Ende der Kondensationsstrecke angeordnet ist, so daß von der Vorderseite im Bereich der Tür angesaugte Wrasendämpfe schon weitgehend kondensiert sind, bevor sie in den Ventilator eintreten.

Sofern während des Betriebes des erfindungsgemäßen Ofens nicht mit allzu großen Dampfüberschüssen zu rechnen ist, ist es ausreichend, wenn die mit dem Bodenablauf verbundene Saugleitung im hinteren Bereich der Absaughaube in diese einmündet.

In diesem Fall reichen die Zumischung von Frischluft bzw. die Länge der Saugleitung und die ohnehin infolge des laufenden Ventilators vorhandene Kühlung der Absaughaube aus, um eine weitgehende Kondensation der über den Bodenauslauf austretenden Dämpfe bereits vor dem Eintritt in den Ventilator zu ermöglichen.

In alternativer Weise kann vorgesehen sein, daß die mit dem Bodenablauf verbundene Saugleitung im vorderen Bereich der Absaughaube in diese einmündet.

Diese Maßnahme hat den Vorteil, daß auch über die Saugleitung angesaugte Dämpfe zunächst die Kondensationseinrichtung innerhalb der Absaughaube durchlaufen, bevor diese in den Ventilator eintreten. Dadurch ist auch bei großen aus dem Garraum über den Bodenablauf austretenden Dampfmengen sichergestellt, daß diese kondensiert werden, so daß eine praktisch vollständig dampffreie Abluft gewährleistet ist. Ein gewisser Nachteil bei dieser Bauart besteht darin, daß durch die zusätzlich nach vorn geführte Saugleitung der Aufbau der Absaughaube etwas kompliziert wird bzw. der Platzbedarf etwas vergrößert wird, kann jedoch zwecks der verbesserten Kondensationswirkung in Kauf genommen werden. Die Verlängerung der Saugleitung bis in den vorderen Bereich der Absaughaube kann entweder unterhalb der Absaughaube selbst geführt sein, sofern hier ausreichend Platz vorhanden ist, kann jedoch auch in die Absaughaube selbst integriert sein, sofern eine äußerst platzsparende Bauweise erforderlich ist bzw. eine besonders einfache Nachrüstmöglichkeit der Absaughaube für herkömmliche Öfen erhalten bleiben soll.

Gemäß einem weiteren Merkmal der Erfindung sind die Prallflächen zumindest im vorderen Bereich der Absaughaube parallel zur Vorderkante der Absaughaube angeordnet, um einen sich mäanderartig in Vertikalrichtung abwechselnd nach unten und oben erstreckenden vertikalen Dampfkanalabschnitt zu bilden.

Diese Maßnahme hat den Vorteil, daß an der Vorderseite der Absaughaube eine breitflächige Absaugwirkung über die gesamte Breite der Absaughaube sichergestellt ist.

Gemäß einem weiteren Merkmal der Erfindung sind die Prallflächen zumindest in einem Teilbereich der Absaughaube senkrecht zur Vorderkante der Absaughaube angeordnet, um einen sich mäanderartig in Horizontalrichtung erstreckenden horizontalen Dampfkanalabschnitt zu bilden.

Auf diese Weise ist es möglich, den Saugkanal auch im hinteren Bereich der Absaughaube in diese einmünden zu lassen, wobei gleichzeitig die über die Saugleitung abgesaugten Dämpfe die Kondensationsstrecke praktisch vollständig durchlaufen können und eine Führung der Saugleitung bis in den vorderen Bereich der Absaughaube überflüssig wird.

In weiter vorteilhafter Ausgestaltung der Erfindung werden die beiden zuvor beschriebenen Maßnahmen derart kombiniert, daß im vorderen Bereich der Absaughaube ein vertikaler Dampfkanalabschnitt gebildet ist, der dann in einen horizontalen Dampfkanalabschnitt im hinteren Bereich der Absaughaube übergeht.

Auf diese Weise ist eine gleichmäßige Absaugung an der Ansaugöffnung der Absaughaube oberhalb der Türöffnung sichergestellt und gleichzeitig ein Anschluß der Saugleitung im hinteren Bereich der Absaughaube ermöglicht, wobei außerdem eine wirkungsvolle Kondensation der Dämpfe sichergestellt ist.

Gemäß einer weiter vorteilhaften Ausgestaltung der Erfindung ist der Ventilator mit einer Steuereinrichtung derart gekoppelt, daß der Ventilator während des Normalbetriebes des Ofens eingeschaltet ist und mit einer ersten niedrigen Leistungsstufe betrieben wird.

Auf diese Weise läuft der Ventilator mit einer relativ niedrigen Leistungsstufe grundsätzlich während des Betriebes des Ofens mit, um eine Absaugung geringer etwaiger über den Bodenablauf austretender Dämpfe zu gewährleisten, die über die Saugleitung nach oben in die Absaughaube eingeleitet werden und sich mit Frischluft vermischen, die über die Ansaugöffnung an der Vorderseite der Absaughaube angesaugt wird.

In weiterer Ausgestaltung der Erfindung ist ein Sensor zur Erfassung der Türstellung vorgesehen, der mit der Steuereinrichtung derart gekoppelt ist, daß der Ventilator bei geöffneter Tür mit einer zweiten Leistungsstufe betrieben wird, die gegenüber der ersten Leistungsstufe eine erhöhte Saugleistung aufweist.

Auf diese Weise wird sichergestellt, daß bei Öffnen der Tür austretende Dämpfe durch ausreichend hohe Leistung des Ventilators wirkungsvoll abgesaugt werden, so daß ein Austreten von Wrasendämpfen an die Umgebung weitgehend vermieden wird. Dies ist insbesondere dann vorteilhaft, wenn der erfindungsgemäße Ofen mit Dampf beheizt wird, das heißt als sogenannter Kombidämpfer betrieben wird.

In zusätzlicher Weiterbildung der Erfindung ist ein Sensor zur Erfassung einer erhöhten Dampfbildung vorgesehen, der mit der Steuereinrichtung derart gekoppelt ist, daß der Ventilator bei erhöhter Dampfbildung mit höherer Leistung als im Normalbetrieb läuft.

Auf diese Weise wird sichergestellt, daß auch bei erhöhter Dampfbildung innerhalb des Garraums, die beispielsweise bei der Behandlung von tiefgefrorenen Lebensmitteln auftreten kann, eine wirkungsvolle Abführung des überschüssigen Dampfes erreicht wird. Der Sensor zur Erfassung der Dampfbildung kann beispielsweise als Thermoelement ausgebildet sein, das gemäß der deutschen Patentanmeldung P 44 03 386.9 in einem Fühlerrohr angeordnet ist, das einerseits mit dem Bodenauslauf verbunden ist und andererseits in den Ansaugbereich eines Umluftgebläses am rückwärtigen Ende des Garraums ausmündet, wie dies in der deutschen Patentanmeldung P 44 03 386.9 beschrieben ist.

Ein am Dampferzeuger oder am Garraum etwa vorhandenes Sicherheitsventil, das bei starkem Dampfüberschuß öffnet, kann hierbei natürlich unmittelbar oder über eine Verbindungsleitung in die Absaughaube ausmünden, um auch bei Überdruck austretende Dämpfe über die Absaughaube abzuführen.

Es versteht sich ferner, daß die zuvor beschriebene Absaughaube auch als selbständiges Bauteil herstellbar ist und nachträglich in einen herkömmlichen Ofen integriert werden kann.

Schließlich sei darauf hingewiesen, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung.

Darin zeigen:
- Fig. 1: eine vereinfachte Darstellung eines erfindungsgemäßen Ofens im Längsschnitt bei geöffneter Tür;
- Fig. 2: eine Aufsicht einer alternativen Ausführungsform der erfindungsgemäßen Absaughaube bei abgenommenem Deckblech und
- Fig. 3: einen Schnitt durch die Absaughaube gemäß Fig. 2 gemäß der Linie III-III.

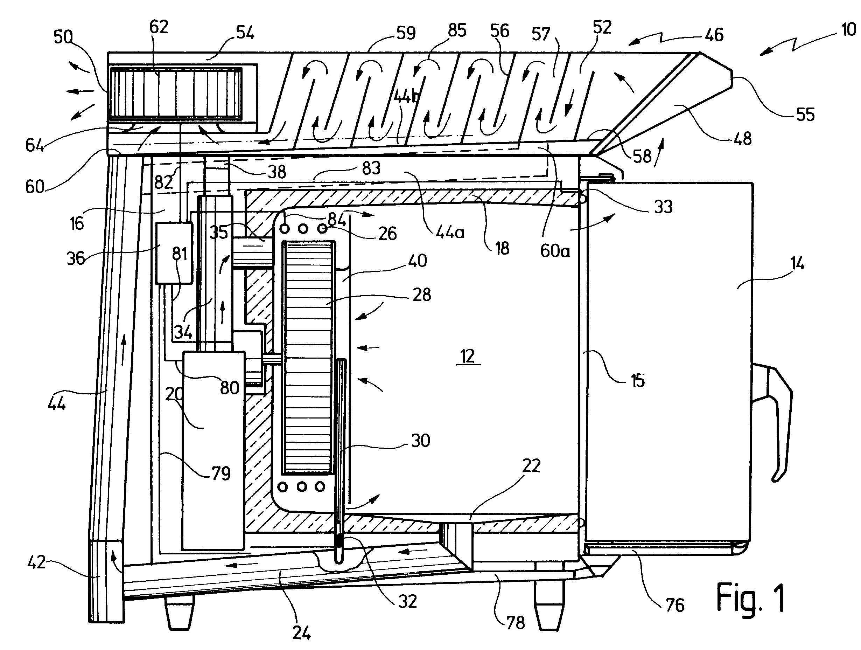

In Fig. 1 ist ein erfindungsgemäßer Ofen insgesamt mit der Ziffer 10 bezeichnet.

Der Ofen 10 umfaßt einen Garraum 12, der von einem Gehäuse 16 umschlossen ist, das eine vordere Türöffnung 15 aufweist, die mittels einer Tür 14 verschließbar ist.

Der Garraum 12 ist an seiner Innenseite mit Edelstahl verkleidet und von einer Wärmeisolation 18 umschlossen.

Zur Beheizung des Ofens 10 ist ein Dampferzeuger 20 vorgesehen, von dem austretender Dampf über eine Dampfleitung 34 durch eine Dampfeintrittsöffnung 35 in der Rückwand in den Garraum 12 eintritt und mittels eines Umwälzgebläses 28 im Garraum 12 umgewälzt wird, wie dies im einzelnen in der deutschen Patentanmeldung P 44 03 386.9 beschrieben ist. Zusätzlich ist das Umwälzgebläse 28 von einer Heizung 84 umgeben, um die Aufheizung zu unterstützen. Das Umwälzgebläse 28 saugt aus dem Garraum 12 axial über einen Ansaugstutzen 40 an und bläst die angesaugte Luft, die sich mit eintretendem Dampf vermischt und zusätzlich aufgeheizt wird, über seitliche Öffnungen in den Garraum 12, wie dies im einzelnen in der zuvor erwähnten Patentanmeldung beschrieben ist.

Am Boden des Garraums 12 ist ein Bodenablauf 22 vorgesehen, der in einen Kondensatabfluß 24 mündet. Zur Steuerung der Dampferzeugung im Dampferzeuger 20, der Heizung 84 und des Umwälzgebläses 28 ist eine Steuereinrichtung 36 vorgesehen, die in Abhängigkeit von der von einem Sensorelement 32 aufgenommenen Temperatur die Leistung des Dampferzeugers 20, der Heizung 84 und gegebenenfalls der Drehzahl des Umwälzgebläses 28 regelt. Der Sensor 32 ist innerhalb eines Fühlerrohres 30 angeordnet, das an seinem unteren Ende in den Kondensatabfluß 24 mündet und an seinem oberen Ende bis in den Bereich des Ansaugstutzens 40 des Umwälzgebläses 28 geführt ist. Der Sensor 32, der Dampferzeuger 20, die Heizung 84 und das Umwälzgebläse 28 sind über entsprechende Steuerleitungen 79, 80, 84, 81 mit der Steuereinrichtung 36 verbunden.

Auf die Oberseite des Gehäuses 16 ist eine Absaughaube 46 aufgesetzt, die einen vorderen, der Tür 14 zugewandten Bereich 52 und einen hinteren Bereich 54 aufweist. Der vordere Bereich 52 ist bis über die Türöffnung 15 nach vorn vorgezogen und mündet oberhalb der Türöffnung 15 durch eine schräge Ansaugöffnung 48 aus, die sich über die gesamte Breite des Ofens 10 erstreckt.

Im hinteren Bereich 54 ist ein Ventilator 62 angeordnet, der im dargestellten Ausführungsbeispiel als Radialgebläse ausgeführt ist, das an seinem unteren Ende über einen Ansaugstutzen 64 ansaugt und am hinteren Ende der Absaughaube 46 über eine rückwärtige Austrittsöffnung 50 ausmündet.

Der Boden 58 der Absaughaube 46 ist schräg nach hinten geneigt, so daß auftretendes Kondensat nach hinten abläuft.

Am hinteren Ende der Absaughaube 46 ist eine Saugleitung 44 über einen Saugleitungsanschluß 60 angeschlossen, die hinter der Rückwand des Gehäuses 16 im wesentlichen vertikal nach unten verläuft und über ein T-Stück 42 mit dem Kondensatabfluß 24 verbunden ist.

In der Absaughaube 46 anfallendes Kondensat läuft somit über den schräg nach hinten geneigten Boden 58 zum Saugleitungsanschluß 60 und schließlich über die Saugleitung 44 in den Kondensatabfluß 24.

In der Absaughaube 46 ist eine Mehrzahl von Prallflächen oder Prallblechen 56 im wesentlichen vertikal bzw. leicht nach vorn geneigt angeordnet, wobei die einzelnen Prallbleche 56 parallel zur Vorderkante 55 der Absaughaube 46 verlaufen. Die Prallbleche 56 sind abwechselnd an der Oberseite 59 und an der Bodenfläche 58 unter Bildung eines Spaltes an der gegenüberliegenden Seite angeordnet, so daß ein Dampfkanal 57 gebildet ist, der sich von der Ansaugöffnung 48 mäanderartig in der Absaughaube 46 nach hinten erstreckt, und der jeweils im wesentlichen vertikal verlaufende Abschnitte aufweist, zwischen denen eine Umlenkung abwechselnd am oberen und am unteren Ende erfolgt. Dieser so angeordnete Dampfkanalabschnitt wird im folgenden als vertikaler Dampfkanalabschnitt 57 bezeichnet.

Über die Ansaugöffnung 48 angesaugte Wrasendämpfe gelangen also durch den vertikalen Dampfkanalabschnitt 57 bis in den hinteren Bereich 54 der Absaughaube 46, werden dabei kondensiert, vermischen sich schließlich vor dem Ansaugstutzen 64 des Ventilators 62 mit etwaigen über die Saugleitung 44 durch den Bodenablauf 22 aus dem Garraum 12 angesaugten Dämpfen, und treten dann nach einer weitgehenden Kondensation über die Austrittsöffnung 50 nach hinten aus. Der Ventilator 62 steht ebenfalls über eine Steuerleitung 82 mit der Steuereinrichtung 36 in Verbindung, die zusätzlich noch über eine Steuerleitung 83 mit einem Türkontakt 33 gekoppelt ist.

Die Absaughaube 46 wird nun folgendermaßen gesteuert:
In einer ersten Einschaltstufe, die dem Normalbetrieb des Ofens bei geschlossener Tür entspricht, läuft der Ventilator 62 mit einer ersten Leistungsstufe mit einer relativ niedrigen Drehzahl. In diesem Bereich wird die Dampferzeugung im wesentlichen über den Sensor 32 im wesentlichen derart gesteuert, daß im Garraum 12 kein großer Dampfüberschuß entsteht. Über den Bodenablauf 22 noch austretende Dämpfe werden über den langsam laufenden Ventilator 62 durch die Saugleitung 44 abgesaugt und vermischen sich im Bereich des Ansaugstutzens 64 mit Frischluft, die über die Ansaugöffnung 48 von vorn in die Absaughaube 46 eintritt. Durch Vermischung mit der Frischluft werden Dampfanteile, die noch nicht zuvor in der Saugleitung 44 kondensiert sind, im Bereich des Ansaugstutzens 64 kondensiert und laufen über die Saugleitung 44 in den Kondensatabfluß 24.

Wird die Tür 14 geöffnet, so wird über den Türkontakt 33 der Ventilator 62 auf eine zweite Leistungsstufe umgeschaltet, um mit einer erhöhten Gebläsedrehzahl aus der Türöffnung 15 austretende Wrasendämpfe über die Ansaugöffnung 48 wirkungsvoll abzusaugen. Die Wrasendämpfe werden durch den vertikalen Dampfkanal 57 wie durch die Pfeile 85 angedeutet hindurchgeführt und kondensieren an den relativ kühlen Prallblechen 56.

Somit werden bei Öffnen der Tür austretende Wrasendämpfe wirkungsvoll abgesaugt und kondensiert, so daß weitgehend dampffreie Abluft aus der Austrittsöffnung 50 nach hinten austritt.

Zweckmäßigerweise wird bei einem Öffnen der Tür 14 gleichzeitig die Dampferzeugung unterbrochen, die Heizung 26 abgeschaltet und das Umwälzgebläse 28 gleichfalls abgeschaltet.

Tritt während des Betriebes des Ofens 10, der vorzugsweise über die Steuereinrichtung 36 programmgesteuert abläuft, innerhalb des Garraums 12 ein Dampfüberschuß auf, so wird dies durch den Sensor 32 erfaßt, der eine Temperaturerhöhung registriert. Mittels der Steuereinrichtung 36 wird der Ventilator 62 auf eine erhöhte Leistungsstufe umgeschaltet, um so einen plötzlich im Garraum 12 auftretenden Dampfüberschuß wirkungsvoll über die Saugleitung 44 abzuführen. Infolge der Zumischung von Frischluft, die über die Ansaugöffnung 48 eintritt, ergibt sich eine weitgehende Kondensation auch größerer Dampfmengen im Bereich des Ansaugstutzens 64 des Ventilators 62, so daß trotz eines relativ großen Dampfüberschusses im Garraum 12 eine weitgehende Kondensation der abgesaugten Dämpfe erfolgt.

Bei einer alternativen Ausführung der Erfindung mündet die Saugleitung 44 nicht unmittelbar in das hintere Ende der Absaughaube 46 ein, sondern ist unterhalb der Absaughaube 46 nach vorn geführt und mündet im vorderen Bereich 52 über einen Saugleitungsanschluß 60a in die Absaughaube 46 ein, wie dies durch die gestrichelte Linie 44a schematisch angedeutet ist.

Bei dieser Ausführung ergibt sich der Vorteil, daß über die Saugleitung 44a über den Bodenablauf 22 abgesaugte Dämpfe den Dampfkanal 57 praktisch vollständig durchlaufen und somit eine vollständige Kondensation dieser Dämpfe auch bei großem Dampfüberschuß sichergestellt ist.

Bei einer weiteren Alternative ist die Saugleitung 44b innerhalb der Absaughaube 46 bis in den vorderen Bereich 52 geführt und mündet dort in den Dampfkanal 57 ein, wie dies durch die doppelt strichpunktierte Linie dargestellt ist. Diese Ausführung hat gegenüber der zuvor genannten Ausführung den Vorteil, daß unterhalb der Absaughaube 46 keine zusätzlichen Leitungen erforderlich sind, die nicht in die Absaughaube 46 selbst integriert sind. Einen gewissen Nachteil stellt dagegen der etwas kompliziertere Aufbau der Absaughaube 46 selbst dar.

Die Absaughaube 46 besteht vorzugsweise aus Edelstahlblech, das in der gewünschten Weise verschweißt ist.

Der Saugleitungsabschnitt 44b, der sich innerhalb der Absaughaube 46 befindet, kann hierbei beispielsweise durch ein parallel zur Bodenfläche 58 geführtes Blech gebildet sein.

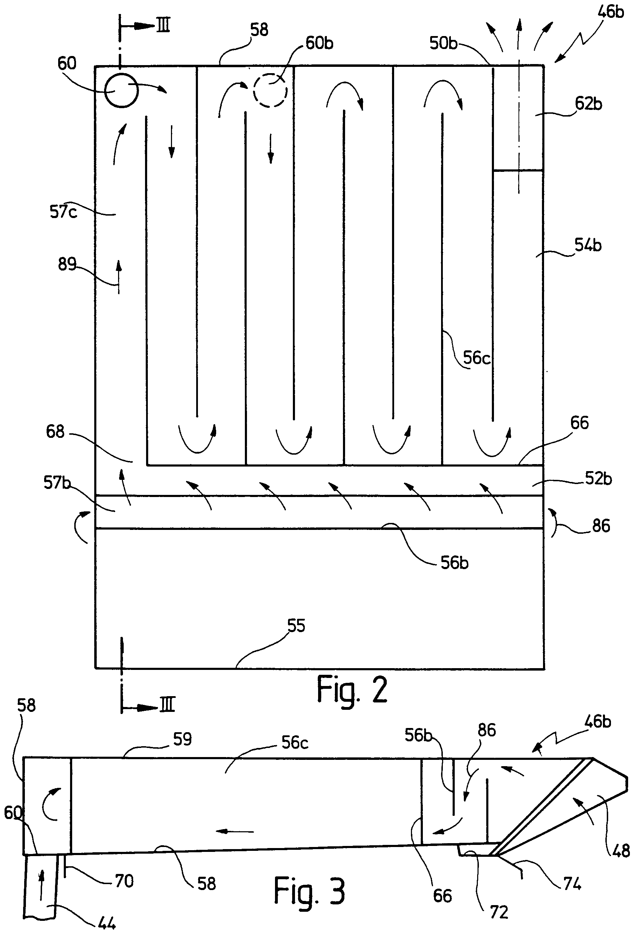

Eine weitere Alternative der Absaughaube ist in den Figuren 2 und 3 dargestellt und insgesamt mit der Ziffer 46b bezeichnet. Die Absaughaube 46b weist die gleiche äußere Form wie die zuvor beschriebene Ausführung auf und unterscheidet sich im wesentlichen durch eine veränderte Anordnung der Prallbleche innerhalb der Absaughaube 46b.

Die Absaughaube besitzt im vorderen Bereich 52b einige vertikal angeordnete Prallbleche 56b, durch die ein kurzer vertikaler Dampfkanalabschnitt 57b gebildet ist, durch den über die Ansaugöffnung 48 Luft bzw. Dämpfe gleichmäßig über die gesamte Breite der Ansaugöffnung 48 angesaugt werden, die dann über den vertikalen Dampfkanalabschnitt 57b umgelenkt werden und schließlich in einen horizontalen Dampfkanalabschnitt 57c durch eine Öffnung 68 übertreten, der durch ein Trennblech 66 von dem vertikalen Dampfkanalabschnitt 57b abgegrenzt ist. Im horizontalen Dampfkanalabschnitt 57c sind die Prallbleche 56c gleichfalls vertikal angeordnet, verlaufen jedoch senkrecht zur Vorderkante 55 der Absaughaube 46b, derart, daß abwechselnd Übertrittsöffnungen zwischen den Prallblechen 56c und der Trennwand 66 und zwischen den Prallblechen 56c und der Rückwand 58 der Absaughaube 46 gebildet sind. Somit ergibt sich im horizontalen Dampfkanalabschnitt 57c eine mäanderartige Dampfkanalform, in die abgesaugte Luft bzw. Dämpfe über eine an einer Seite 68 gebildete Öffnung eintreten, in Richtung der Pfeile 89 den Dampfkanal 57c durchlaufen und schließlich an der anderen Seite über die Austrittsöffnung 50b nach hinten austreten. Der Ventilator ist bei dieser Ausführung als Axialventilator kurz vor der Austrittsöffnung 50b angeordnet, wie dies durch die Ziffer 62b angedeutet ist. Gegebenenfalls können auch übereinander mehrere Axialventilatoren vorgesehen sein oder aber ein Radialgebläse, das im letzten Dampfkanalabschnitt 57c vor der Austrittsöffnung 50b angeordnet ist.

Die Saugleitung 44 mündet bei den in Figuren 2 und 3 dargestellten Ausführungen im hinteren Eckbereich des horizontalen Dampfkanalabschnittes 57c von unten bei 60 ein. Alternativ kann der Saugkanalanschluß auch in einem nachfolgenden horizontalen Dampfkanalabschnitt 57c mehr zur Mitte der Absaughaube 46b hin, jedoch vorzugsweise an deren hinterem Ende einmünden, wie durch die Ziffer 60b angedeutet ist.

Insgesamt ist mit dieser Ausführung eine gleichmäßige Absaugung an der Ansaugöffnung 48 sichergestellt, wobei gleichzeitig über die Saugleitung 44 angesaugte Dämpfe an einer ausreichend großen Fläche von Prallblechen entlanggeführt sind, um eine vollständige Kondensation auch bei hohem Dampfüberschuß sicherzustellen.

An der Unterkante der Tür 14 ist ferner noch eine Auffangrinne 76 angeordnet, um bei geöffneter Tür 14 abtropfendes Kondensat aufzufangen und über eine fest am Gehäuse 16 angeordnete Kondensatleitung 78 in den Kondensatabfluß 24 übertreten zu lassen.

Der Dampferzeuger 20 ist ferner über ein Sicherheitsventil 38 mit der Absaughaube 46 bzw. 46b verbunden, so daß bei Überdruck austretender Dampf unmittelbar in die Absaughaube gelangt.

## Patentansprüche

1. Ofen zur Wärmebehandlung von Lebensmitteln, mit einem von einem Gehäuse (16) eingeschlossenen Garraum (12), der mittels einer Tür (14) verschließbar ist, mit einer Heizeinrichtung (20, 26) zur Beheizung des Garraums (12), mit einem Bodenablauf (22) zur Abführung von Kondensat aus dem Garraum (12), und mit einer oberhalb des Garraums angeordneten Absaughaube (46; 46b) zur Absaugung von Wrasendämpfen mittels eines Ventilators (62; 62b), dadurch gekennzeichnet, daß die Absaughaube (46; 46b) über eine Saugleitung (44; 44a; 44b) mit dem Bodenablauf (24) verbunden ist.

2. Ofen nach Anspruch 1, dadurch gekennzeichnet, daß die Absaughaube (46; 46b) eine Ansaugöffnung (48) aufweist, die im Bereich oberhalb der Türöffnung (15) mündet.

3. Ofen nach Anspruch 1 oder 2, dadurch gekennzeichnet, daß eine Kondensationseinrichtung in die Absaughaube (46; 46b) integriert ist.

4. Ofen nach Anspruch 3, dadurch gekennzeichnet, daß die Kondensationseinrichtung eine Mehrzahl von Prallflächen (56; 56b, c) aufweist, zwischen denen ein Dampfkanal (57; 57b, c) gebildet ist.

5. Ofen nach Anspruch 4, dadurch gekennzeichnet, daß die Prallflächen (56; 56b, c) im wesentlichen vertikal angeordnet sind, und daß die Bodenfläche (58) der Absaughaube (46; 46b) in Richtung zum Saugleitungsanschluß hin (60; 60b) geneigt ist.

6. Ofen nach einem oder mehreren der vorhergehenden Ansprüche, dadurch gekennzeichnet, daß ein Ventilator (62; 62b) im hinteren (54; 54b), der Tür (14) gegenüberliegenden Bereich der Absaughaube (46; 46b) angeordnet ist.

7. Ofen nach einem oder mehreren der vorhergehenden Ansprüche, dadurch gekennzeichnet, daß die mit dem Bodenablauf (22) verbundene Saugleitung (44) im hinteren Bereich (54; 54b) der Absaughaube (46; 46b) in diese einmündet.

8. Ofen nach einem oder mehreren der Ansprüche 1 bis 6, dadurch gekennzeichnet, daß die mit dem Bodenablauf (22) verbundene Saugleitung (44a, 44b) im vorderen Bereich (52) der Absaughaube (46) in diese einmündet.

9. Ofen nach Anspruch 8, dadurch gekennzeichnet, daß die Saugleitung (44b) im hinteren Bereich der Absaughaube (46) in diese eintritt und innerhalb der Absaughaube (46) bis in den vorderen Bereich (52) geführt ist und dort in den Dampfkanal (57) einmündet.

10. Ofen nach einem oder mehreren der vorhergehenden Ansprüche, dadurch gekennzeichnet, daß die Prallflächen (56; 56b) zumindest im vorderen Bereich (52; 52b) der Absaughaube (46; 46b) parallel zur Vorderkante (55) der Absaughaube (46; 46b) angeordnet sind, um einen sich mäanderartig in Vertikalrichtung abwechselnd nach unten und oben erstreckenden vertikalen Dampfkanalabschnitt (57; 57b) zu bilden.

11. Ofen nach einem oder mehreren der vorhergehenden Ansprüche, dadurch gekennzeichnet, daß die Prallflächen (56c) zumindest in einem Teilbereich (54b) der Absaughaube (46b) senkrecht zur Vorderkante der Absaughaube (46b) verlaufen, um einen sich mäanderartig in Horizontalrichtung erstreckenden horizontalen Dampfkanalabschnitt (57c) zu bilden.

12. Ofen nach Anspruch 10 und 11, dadurch gekennzeichnet, daß die Saugleitung (44) in den hinteren Bereich (54b) des horizontalen Dampfkanalabschnittes (57c) einmündet.

13. Ofen nach einem oder mehreren der vorhergehenden Ansprüche, dadurch gekennzeichnet, daß der Ventilator (46; 46b) mit einer Steuereinrichtung (36) derart gekoppelt ist, daß der Ventilator (46; 46b) während des Normalbetriebes des Ofens (10) eingeschaltet ist und mit einer ersten niedrigen Leistungsstufe betrieben wird.

14. Ofen nach einem oder mehreren der vorhergehenden Ansprüche, dadurch gekennzeichnet, daß ein Sensor (33) zur Erfassung der Türstellung vorgesehen ist, der mit der Steuereinrichtung (36) derart gekoppelt ist, daß der Ventilator (62; 62b) bei geöffneter Tür (14) mit einer zweiten Leistungsstufe betrieben wird, die gegenüber der ersten Leistungsstufe eine erhöhte Saugleistung aufweist.

15. Ofen nach einem oder mehreren der vorhergehenden Ansprüche, dadurch gekennzeichnet, daß ein Sensor (32) zur Erfassung einer erhöhten Dampfbildung vorgesehen ist, der mit der Steuereinrichtung (36) derart gekoppelt ist, daß der Ventilator (62) bei erhöhter Dampfbildung mit höherer Leistung als im Normalbetrieb läuft.

16. Absaughaube für einen Ofen nach einem oder mehreren der vorhergehenden Ansprüche.
